# EUROPEAN PATENT SPECIFICATION

(11) **EP 4 464 088 B1**
(45) Date of publication and mention of the grant of the patent: **21.10.2026**
(21) Application number: 22939187.5
(22) Date of filing: 29.04.2022
(51) Int. Cl.: H04W 72/02, H04L 5/00

(54) **DYNAMIC SWITCHING BETWEEN SINGLE-TRP AND MULTI-TRP BASED PUSCH SCHEMES**
DYNAMISCHE UMSCHALTUNG ZWISCHEN EINZEL-TRP- UND MULTI-TRP-BASIERTEN PUSCH-SCHEMATA
COMMUTATION DYNAMIQUE ENTRE DES SCHÉMAS PUSCH REPOSANT SUR UN MONO-TRP OU UN TRP MULTIPLE

(43) Date of publication of application: 20.11.2024
(73) Proprietor: Lenovo (Beijing) Limited, Beijing 100085 (CN)
(72) Inventor: LIU, Bingchao, Beijing 100094 (CN); ZHU, Chenxi, Fairfax, Virginia 22033 (US); XIAO, Lingling, Beijing 100086 (CN); LING, Wei, Beijing 102299 (CN); ZHANG, Yi, Beijing 100029 (CN)
(74) Representative: Openshaw & Co.
(86) International application number: PCT/CN2022/090202
(87) International publication number: WO 2023/206338

(56) References cited:
- EP-A1- 4 376 464
- WO-A1-2021/020847
- WO-A1-2022/015595
- CN-A- 114 402 687
- US-A1- 2022 132 534
- US-A1- 2022 272 674
- XIAOMI: "Enhancements on Multi-TRP for PDCCH, PUCCH and PUSCH", 3GPP DRAFT; R1-2102960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210412 - 20210420, 7 April 2021 (2021-04-07), Mobile Competence Centre ; 650, route des Lucioles ; F-06921 Sophia-Antipolis Cedex ; France, XP052177794
- VIVO: "Remaining issues on Multi-TRP for PDCCH, PUCCH and PUSCH enhancements", 3GPP DRAFT; R1-2110991, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211111 - 20211119, 5 November 2021 (2021-11-05), Mobile Competence Centre ; 650, route des Lucioles ; F-06921 Sophia-Antipolis Cedex ; France, XP052073947

## Description

### FIELD

The subject matter disclosed herein generally relates to wireless communications, and more particularly relates to methods and apparatuses for dynamic switching between single-TRP and multi-TRP based PUSCH schemes.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (Mobile Terminal), Transmitter (TX), Receiver (RX), transmission reception point (TRP), codebook (CB), non-codebook (nCB), Sounding Reference Signal (SRS), Physical Uplink Shared Channel (PUSCH), band width part (BWP), Downlink Control Information (DCI), Space Division Multiplexing (SDM), Frequency Division Multiplexing (FDM), Transmission Configuration Indicator (TCI), Reference Signal (RS), SRS resource indicator (SRI), SRS resource set indicator (SRSI), Code Division Multiplexing (CDM), Demodulation Reference Signal (DMRS), transport block (TB), Most Significant Bit (MSB), Least Significant Bit (LSB), Channel State Information Reference Signal (CSI-RS).

Single-TRP based UL transmission, which can be codebook (CB) based or non-codebook (nCB) based, was specified in NR Release 15, where one SRS resource set used for CB or nCB based PUSCH is configured for a BWP of a cell for a UE.

Single-DCI multi-TRP based UL transmission with repetition was specified in NR Release 17, where one TRP may send a DCI scheduling multiple PUSCH transmissions transmitted to different TRPs using different time resources. The UE can only transmit a PUSCH in a time instant from a single panel with a single TX beam.

In addition, in a scenario of single DCI based multi-TRP operation with simultaneous multi-panel UL transmission, one TRP may send a DCI scheduling one PUSCH transmitted from two UE panels with different TX beams to different TRPs. SDM or FDM based schemes can be considered.

One potential issue is how to support dynamic switching between different UL transmission schemes. For example, it is necessary to identify whether the scheduled PUSCH transmission is a single-TRP based UL transmission or a multi-TRP based UL transmission in different scenarios.

This disclosure targets dynamic switching between different UL transmission schemes considering potential simultaneous multi-panel UL transmission.

WO2021020847A1 discloses a method for transmitting a physical uplink shared channel (PUSCH) by a terminal in a wireless communication system which comprises the steps of: receiving configuration information related to PUSCH; receiving downlink control information (DCI) that schedules the PUSCH; and transmitting the PUSCH on the basis of the DCI. The DCI includes a specific field. On the basis that the specific field indicates at least one SRS resource related to simultaneous transmission across multi-panel (STxMP), the PUSCH is characterized by being transmitted on the basis of a plurality of panels.

EP4376464A1, which is prior art according to Article 54(3) EPC, discloses a terminal which includes: a control section that determines, when at least one of a number of SRS resources specified by using a reference signal for measurement (Sounding Reference Signal (SRS)) resource indicator (SRS Resource Indicator (SRI)) for transmission of a physical uplink shared channel and a number of precoding matrices specified by using a transmitted precoding matrix indicator (TPMI) for the transmission of the physical uplink shared channel is two or more, mapping between a layer for the transmission of the physical uplink shared channel and a port of specified SRS resources; and a transmitting section that transmits the physical uplink shared channel. According to one aspect of the present disclosure, it is possible to appropriately perform PUSCH transmission.

### BRIEF SUMMARY

Methods and apparatuses for dynamic switching between single-TRP and multi-TRP based PUSCH schemes are disclosed. The invention is defined by the appended independent claims.

In one embodiment, a UE comprises a transceiver; and a processor coupled to the transceiver, wherein the processor is configured to receive, via the transceiver, a higher layer parameter to indicate the multi-panel/TRP PUSCH scheme, a configuration of one or two SRS resource sets for CB or nCB in a BWP of a cell, and a DCI scheduling a PUSCH transmission, wherein, the one or two SRS resource sets are associated with a first UL TCI state and a second UL TCI state; and determine UL TCI state(s) applied to the scheduled PUSCH transmission according to the higher layer parameter and fields contained in the DCI, depending on the configuration of one or two SRS resource sets for CB or nCB.

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

In another embodiment, a method performed at a UE comprises receiving a higher layer parameter to indicate the multi-panel/TRP PUSCH scheme, a configuration of one or two SRS resource sets for CB or nCB in a BWP of a cell, and a DCI scheduling a PUSCH transmission, wherein, the one or two SRS resource sets are associated with a first UL TCI state and a second UL TCI state; and determining UL TCI state(s) applied to the scheduled PUSCH transmission according to the higher layer parameter and fields contained in the DCI, depending on the configuration of one or two SRS resource sets for CB or nCB.

In still another embodiment, a base unit comprises a transceiver; and a processor coupled to the transceiver, wherein the processor is configured to transmit, via the transceiver, a higher layer parameter to indicate the multi-panel/TRP PUSCH scheme and a configuration of one or two SRS resource sets for CB or nCB, wherein, the one or two SRS resource sets are associated with a first UL TCI state and a second UL TCI state; determine UL TCI state(s) applied to a PUSCH transmission according to the preconfigured higher layer parameter, depending on the configuration; and transmit, via the transceiver, a DCI scheduling the PUSCH transmission, wherein, the DCI contains fields for indicating the determined UL TCI state(s).

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

In yet another embodiment, a method performed at a base unit comprises transmitting a higher layer parameter to indicate the multi-panel/TRP PUSCH scheme and a configuration of one or two SRS resource sets for CB or nCB, wherein, the one or two SRS resource sets are associated with a first UL TCI state and a second UL TCI state; determining UL TCI state(s) applied to a PUSCH transmission according to the preconfigured higher layer parameter, depending on the configuration; and transmitting a DCI scheduling the PUSCH transmission, wherein, the DCI contains fields for indicating the determined UL TCI state(s).

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates a summary of the first embodiment;
Figure 2 illustrates a summary of the first embodiment;
Figure 3 is a schematic flow chart diagram illustrating an embodiment of a method;
Figure 4 is a schematic flow chart diagram illustrating an embodiment of another method; and
Figure 5 is a schematic block diagram illustrating apparatuses according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

"Multi-TRP" means that a serving cell can have multiple (e.g. two) TRPs. "Multi-panel" means that a UE can have multiple (e.g. two) panels at least for UL transmission. In the condition that a UE equipped with two panels (e.g. panel#0 and panel#1) transmits UL signal (e.g. PUSCH transmissions) to a serving cell with two TRPs (e.g. TRP#0 and TRP#1), the UE may use one panel (e.g. panel#0) to transmit UL signal to one TRP (e.g. TRP#0) of the serving cell and use the other panel (e.g. panel#1) to transmit UL signal to another TRP (e.g. TRP#1) of the serving cell. So, one panel is associated with one TRP. For example, panel#0 is associated with TRP#0, and panel#1 is associated with TRP#1. So, multi-panel multi-TRP scenario can be described as multi-panel/TRP.

"Multi-panel/TRP simultaneous UL transmission" means the UE transmit UL signals from multiple panels (e.g. two panels) to multiple TRPs (e.g. two TRPs) simultaneously.

Two UL or joint TCI states are activated or indicated by a single TCI codepoint for UL signal (e.g. PUSCH transmission) transmitted from two panels to two TRPs for one BWP of a cell if unified TCI framework is configured. UL TCI state is indicated when separate DL/UL TCI framework is configured, where the Tx beam for UL transmit and the Rx beam for DL reception are separately indicated by UL TCI state and DL TCI state, respectively. Each UL TCI state indicates a DL RS or an SRS for the UE to determine the TX spatial filter, i.e., the TX beam, for UL transmission. Joint TCI state is indicated when joint DL/UL TCI framework is configured, where both Tx beam for UL transmission and Rx beam for DL reception are determined by the indicated joint TCI state. Each joint TCI state indicates a DL RS for the UE to determine the TX spatial filter for UL transmission, and the RX spatial filter for DL reception. For ease of discussion, in the following description, the indicated two UL or joint TCI states are referred to as the two UL TCI states, or more specifically, a first UL TCI state and a second UL TCI state.

The panel can be identified by SRS resources or SRS resource sets, each of which consists one or multiple SRS resources, configured to the UE.

One or two SRS resource sets can be configured to the UE in a BWP of a cell used for CB or nCB based PUSCH transmission.

The UE can be configured in two different modes for PUSCH multi-antenna precoding, referred as codebook (CB) based transmission and non-codebook (nCB) based transmission, respectively. When the UE is configured with codebook based PUSCH transmission, one or two SRS resource sets used for codebook can be configured in a BWP of a cell for the UE. When the UE is configured with non-codebook based PUSCH transmission, one or two SRS resource sets used for non-codebook can be configured in a BWP of a cell for the UE. To enable codebook based PUSCH transmission, the UE shall be configured to transmit one or more SRS resources used for codebook for channel measurement. Based on the measurements on the configured SRS resources, the gNB determines a suitable rank and the precoding matrix from a pre-defined codebook, which includes a set of precoding matrices with different ranks, and sends the information to the UE.

For non-codebook based PUSCH transmission, the UE is required to measure a CSI-RS to obtain the channel information based channel reciprocity. The UE selects what it believes is a suitable uplink precoder and applies the selected precoder to a set of configured SRS resources with one SRS resource being transmitted on each layer defined by the precoder. Based on the received SRS resources, the gNB decides to modify the UE-selected precoder for the scheduled PUSCH transmission.

If the UE reports a capability to support simultaneous multi-panel UL transmission, two SRS resource sets (e.g. a first SRS resource set and a second SRS resource set) for CB or nCB can be configured in a BWP of a cell, where the same antenna port number is configured for each SRS resource within each SRS resource set when full Tx Power mode is not configured. In this situation, two SRI fields (e.g. a first SRI field and a second SRI field) are contained in the scheduling DCI with format 0_1 or 0_2, where each SRI field indicates one or more SRS resources within an SRS resource set.

When two SRS resource sets (e.g. a first SRS resource set and a second SRS resource set) for CB or nCB are configured to the UE, a first panel corresponds to the first SRS resource set, and a second panel corresponds to the second SRS resource set. The first UL TCI state is applied to the first SRS resource set, and the second UL TCI state is applied to the second SRS resource set. So, the first panel also corresponds to the first UL TCI state, and the second panel also corresponds to the second UL TCI state.

The capability to support simultaneous multi-panel UL transmission can be reported by whether to support simultaneously transmit UL signals with different UL TCI states. If a UE reports to support simultaneously transmit UL signals with different UL TCI states, simultaneous multi-panel UL transmission is supported by the UE. If a UE reports that it does not support simultaneously transmit UL signals with different UL TCI states, simultaneous multi-panel UL transmission is not supported by the UE.

For CB based PUSCH, two SRS resources (i.e. a first SRS resource and a second SRS resource) or four SRS resources (i.e. first two SRS resources and last two SRS resources) are included in the one SRS resource set for CB. So, the first panel corresponds to the first SRS resource or the first two SRS resources, and the second panel corresponds to the second SRS resource or the last two SRS resources. The first UL TCI state is applied to the first SRS resource or the first two SRS resources, and the second UL TCI state is applied to the second SRS resource or the last two SRS resources. So, the first panel also corresponds to the first UL TCI state, and the second panel also corresponds to the second UL TCI state.

For nCB based PUSCH, up to 8 SRS resources can be configured in the one SRS resource set for nCB. So, the first panel corresponds to a first half of the configured SRS resources in the one SRS resource set for nCB, and the second panel corresponds to a second half of the configured SRS resources in the one SRS resource set for nCB. The first UL TCI state applies to the first half of the configured SRS resources in the one SRS resource set for nCB, and the second UL TCI state applies to the second half of the configured SRS resources in the one SRS resource set for nCB. So, the first panel corresponds to the first UL TCI state, and the second panel corresponds to the second UL TCI state.

A DCI (e.g. DCI with format 0_1 or 0_2) can schedule a single-TRP PUSCH transmission (which means that the scheduled PUSCH transmission is to be transmitted from only one panel to one TRP) or a multi-TRP PUSCH transmission (which means that the scheduled PUSCH transmission is to be transmitted from two panels to two TRPs, where the transmission from each panel is transmitted to a different TRP, e.g. from panel#0 to TRP#0 and from panel#1 and TRP#1). In addition, the multi-TRP PUSCH transmission can be based on FDM scheme (e.g. FDM scheme A or FDM scheme B) or SDM scheme (e.g. SDM scheme 1 or SDM scheme 2).

A first embodiment relates to dynamic switching between single-TRP based PUSCH scheme and multi-TRP based PUSCH scheme (i.e. identify which of the single-TRP PUSCH transmission and the multi-TRP PUSCH transmission is scheduled) when two SRS resource sets for CB or nCB are configured in a BWP of a cell.

A PUSCH transmission is scheduled by a DCI with format 0_1 or 0_2 (which may be referred to as scheduling DCI). Two SRI fields (e.g. a first SRI field and a second SRI field) and an "antenna port(s)" field are included in the scheduling DCI.

According to the first embodiment, an SRS resource set indicator (SRSI) field is introduced in the scheduling DCI to identify single-TRP PUSCH transmission or multi-TRP PUSCH transmission.

The SRSI field has two bits, and the field value (or codepoint) of the SRSI field can be '00', '01', '10' or '11'.

When the field value of the SRSI field is '00' or '01', single-TRP based PUSCH scheme is determined. It means that single-TRP PUSCH transmission is scheduled, i.e., the scheduled PUSCH transmission is transmitted by a single panel.

In particular, when the field value of the SRSI field is '00', the first SRI field indicates one or more SRS resources within the first SRS resource set, and the second SRI field is reserved. The first UL TCI state is applied to the scheduled PUSCH transmission, which means that the PUSCH transmission is scheduled to be transmitted by using the first UL TCI state.

When the field value of the SRSI field is '01', the first SRI field indicates one or more SRS resources within the second SRS resource set, and the second SRI field is reserved. The second UL TCI state is applied to the scheduled PUSCH transmission.

It can be seen that when the SRSI field in the scheduling DCI is '00' or '01', only one of the first UL TCI state and the second UL TCI state is applied to the scheduled PUSCH transmission.

When the field value of the SRSI field is '10' or '11', multi-panel/TRP based PUSCH scheme is determined. It means that the scheduled PUSCH transmission is transmitted by using both the first UL TCI state and the second UL TCI state. So, when the SRSI field in the scheduling DCI is '10' or '11', both the first UL TCI state and the second UL TCI state are used. When multi-panel/TRP based PUSCH scheme is determined, which UL TCI state (e.g. the first UL TCI state or the second UL TCI state) is applied to the scheduled PUSCH transmission transmitted from the first panel and the second panel is further determined according to the scheduling DCI and a higher layer parameter *repetitionScheme* configured in the PUSCH Configuration for the UE in a BWP of a cell to indicate the multi-TRP PUSCH scheme

In the scheduling DCI, the first SRI field indicates one or more SRS resources within the first SRS resource set and the second SRI field indicates one or more SRS resources within the second SRS resource set.

The 'antenna port(s)' field in the scheduling DCI and a higher layer parameter *repetitionScheme* in the PUSCH Configuration determine the multi-TRP PUSCH scheme (e.g. SDM scheme 1 or SDM scheme 2 or FDM scheme A or FDM scheme B).

### SDM scheme 1:

When *repetitionScheme* is not configured or *repetitionScheme* is configured and is set as 'fdmSchemeA' or 'fdmSchemeB' and the 'antenna port(s)' field indicates two CDM groups, SDM scheme 1 is determined.

Two DMRS types named DMRS type 1 and DMRS type 2 are specified in NR Release 15. Up to 8 DMRS ports, i.e., DMRS ports 0, 1, ..., 7 are supported for DMRS type 1. DMRS ports 0, 1, 4 and 5 belong to CDM group 0 and DMRS ports 2, 3, 6 and 7 belong to CDM group 1. Up to 12 DMRS ports, i.e., DMRS ports 0, 1, ..., 11 are supported for DMRS type 2. DMRS ports 0, 1, 6 and 7 belong to CDM group 0, DMRS ports 2, 3, 8 and 9 belong to CDM group 1, and DMRS ports 4, 5, 10 and 11 belong to CDM group 2.

The 'antenna port(s)' field in the scheduling DCI indicates a number of DMRS ports (selected from 8 DMRS ports when DMRS type 1 is configured or selected from 12 DMRS ports when DMRS type 2 is configured) each of which is associated with one PUSCH layer. It means that the number of the indicated DMRS ports is equal to the number of PUSCH layers of the scheduled PUSCH transmission. Each PUSCH layer is associated with an indicated DMRS port. The CDM group (e.g. either of CDM group 0 or CDM group 1 when DMRS type 1 is configured, or either of CDM group 0 or CDM group 1 or CDM group 2 when DMRS type 2 is configured) containing the first indicated DMRS port is the first CDM group. If all of the indicated DMRS ports belong to the first CDM group, it means that the 'antenna port(s)' field in the scheduling DCI indicates one CDM group. If any of the indicated DMRS ports (other than the first indicated DMRS port) belongs to another CDM group different from the first CDM group including the first indicated DMRS port, it means that the 'antenna port(s)' field in the scheduling DCI indicates two CDM groups: the first CDM group and a second CDM group.

For SDM scheme 1, different PUSCH layers of the scheduled PUSCH transmission are transmitted by different panels. It means that some PUSCH layer(s) are transmitted by the first panel and the other PUSCH layer(s) are transmitted by the second panel. The PUSCH layer(s) to be transmitted by the first panel are the PUSCH layer(s) each of which is associated with an indicated DMRS port within the first CDM group (which contains the first DMRS port indicated by the 'antenna port(s)' field), and the PUSCH layer(s) to be transmitted by the second panel are the PUSCH layer(s) each of which is associated an indicated DMRS port within the second CDM group (i.e. the other CDM group than the first CDM group).

If the field value of the SRSI field is '10' and the SDM scheme 1 is determined, the first UL TCI state is applied to the PUSCH layer(s) each of which is associated with an indicated DMRS port within the first CDM group, and the second UL TCI state is applied to the PUSCH layer(s) each of which is associated with an indicated DMRS port within the second CDM group.

If the field value of the SRSI field is '11' and the SDM scheme 1 is determined, the second UL TCI state is applied to the PUSCH layer(s) each of which is associated with an indicated DMRS port belonging to the first CDM group, and the first UL TCI state is applied to the PUSCH layer(s) each of which is associated with an indicated DMRS port belonging to the second CDM group.

### SDM scheme 2:

When *repetitionScheme* is configured and is set as 'sdmSchemeA', and the 'antenna port(s)' field indicates one CDM group or two CDM groups, SDM scheme 2 is determined.

For SDM scheme 2, the UE shall transmit two PUSCH transmission occasions (e.g. a first PUSCH transmission occasion and a second PUSCH transmission occasion, which are the same) of a same TB. Each of the two PUSCH transmission occasions has the same number of PUSCH layer(s) and the same time-frequency resources, which means that the same number of PUSCH layer(s) with the same time-frequency resources is simultaneously transmitted by using the first panel and transmitted by using the second panel.

If the field value of the SRSI field is '10' or '11' and the SDM scheme 2 is determined, both the two UL TCI states (i.e. both the first UL TCI state and the second UL TCI state) are applied to the scheduled PUSCH transmission. It means that the first PUSCH transmission occasion is transmitted by using the first UL TCI state, and the second PUSCH transmission occasion is transmitted by using the second UL TCI state, where the first PUSCH transmission occasion and the second PUSCH transmission occasion have the same number of PUSCH layer(s) and the same time-frequency resources.

### FDM scheme A:

When *repetitionScheme* is configured and is set as 'fdmSchemeA' and the 'antenna port(s)' field indicates one CDM group, FDM scheme A is determined.

For FDM scheme A, the UE shall transmit a single PUSCH transmission occasion of a TB. That is, the single (or one) PUSCH transmission occasion is mapped to two non-overlapping frequency domain resource allocations (e.g. a first frequency domain resource allocation of the one PUSCH transmission occasion and a second frequency domain resource allocation of the one PUSCH transmission occasion) corresponding to two panels associated with different UL TCI states.

If the field value of the SRSI field is '10' and the FDM scheme A is determined, the first UL TCI state is applied to the first frequency domain resource allocation of the one PUSCH transmission occasion, and the second UL TCI state is applied to the second frequency domain resource allocation of the one PUSCH transmission occasion.

If the field value of the SRSI field is '11' and the FDM scheme A is determined, the first UL TCI state is applied to the second frequency domain resource allocation of the one PUSCH transmission occasion, and the second UL TCI state is applied to the first frequency domain resource allocation of the one PUSCH transmission occasion.

### FDM scheme B:

When *repetitionScheme* is configured and is set as 'fdmSchemeB' and the 'antenna port(s)' field indicates one CDM group, FDM scheme B is determined.

For FDM scheme B, the UE shall transmit two PUSCH transmission occasions (e.g. a first PUSCH transmission occasion and a second PUSCH transmission occasion) of a same TB. The two PUSCH transmission occasions are mapped to two non-overlapping frequency domain resource allocations corresponding two panels associated with different UL TCI states. That is, the first PUSCH transmission occasion is mapped to a first frequency domain resource allocation for one panel, and the second PUSCH transmission occasion is mapped to a second frequency domain resource allocation for the other panel, wherein the first frequency domain resource allocation and the second frequency domain resource allocation are non-overlapping.

If the field value of the SRSI field is '10' and the FDM scheme B is determined, the first UL TCI state is applied to the first PUSCH transmission occasion associated with the first frequency domain resource allocation, and the second UL TCI state is applied to the second PUSCH transmission occasion associated with the second frequency domain resource allocation.

If the field value of the SRSI field is '11' and the FDM scheme B is determined, the first UL TCI state is applied to the second PUSCH transmission occasion associated with the second frequency domain resource allocation, and the second UL TCI state is applied to the first PUSCH transmission occasion associated with the first frequency domain resource allocation.

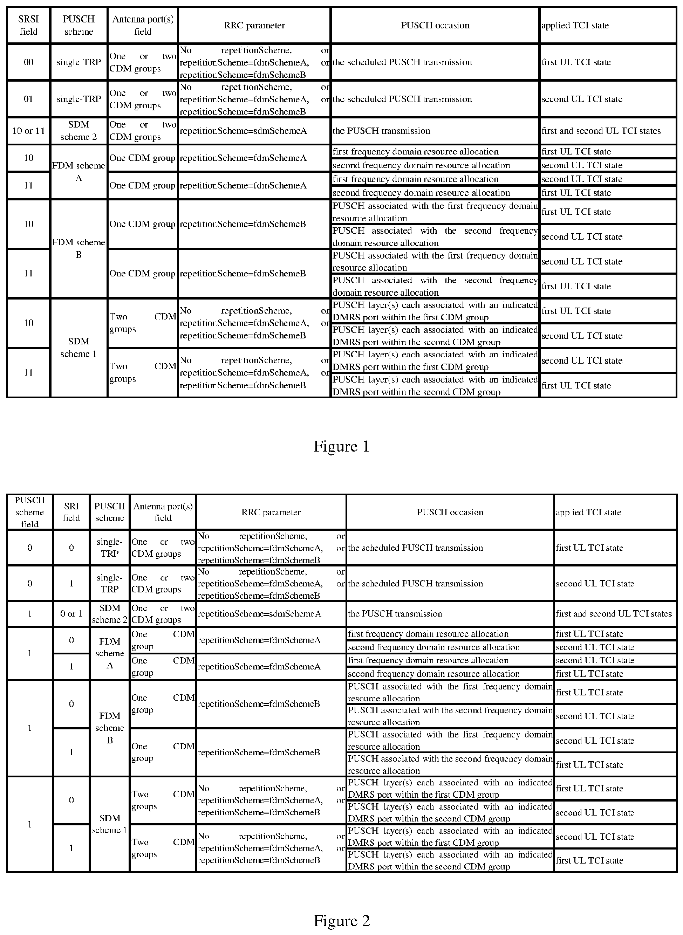

As a whole, the first embodiment can be summarized as in Figure 1.

It can be seen from Figure 1 that, when the field value of the SRSI field is '00' or '01' (i.e. single-TRP based PUSCH scheme is determined), the 'antenna port(s)' field can indicate one or two CDM groups, and the higher layer parameter *repetitionScheme* may be not configured or configured and set as 'fdmSchemeA' or 'fdmSchemeB'.

A second embodiment relates to dynamic switching between single-TRP based PUSCH scheme and multi-TRP based PUSCH scheme (i.e. identify which of the single-TRP PUSCH transmission and the multi-TRP PUSCH transmission is scheduled) when one SRS resource set for CB is configured in a BWP of a cell. For CB based PUSCH transmission, the one SRS resource set contains 2 SRS resources or 4 SRS resources.

A PUSCH transmission is scheduled by a scheduling DCI. One SRI field and an "antenna port(s)" field are included in the scheduling DCI.

The SRI field has 1 bit, and the field value (or codepoint) of the SRI field can be '0' or '1'.

According to the second embodiment, a 1-bit PUSCH scheme field is introduced in the scheduling DCI. The PUSCH scheme field has 1 bit, and the field value (or codepoint) of the PUSCH scheme field can be '0' or '1'.

The second embodiment is summarized in Figure 2.

A comparison between Figure 1 and Figure 2 can reveal that a combination of the PUSCH scheme field and the 1-bit SRI field in the second embodiment is equal to the 2-bits SRSI field in the first embodiment, while the other parts of Figure 1 and of Figure 2 are completely the same. In other words, a 2-bits value composed of MSB being the field value of the PUSCH scheme field and LSB being the field value of the SRI field is the same as the field value of the SRSI field.

The second embodiment can be described as follows:
(1) The PUSCH scheme field identifies single-panel/TRP PUSCH transmission (PUSCH scheme field is indicated as '0') or multi-panel/TRP PUSCH transmission (PUSCH scheme field is indicated as '1').
(2) The 'antenna port(s)' field in the scheduling DCI and a higher layer parameter *repetitionScheme* in the PUSCH Configuration determine the multi-panel/TRP PUSCH scheme (e.g. SDM scheme 1 or SDM scheme 2 or FDM scheme A or FDM scheme B).
(3) When single-panel/TRP PUSCH transmission is determined, the SRI field indicates which UL TCI state (which one of the first UL TCI state and the second UL TCI state) is applied to the scheduled PUSCH transmission; and when multi-panel/TRP PUSCH transmission is determined, SDM scheme 1 or SDM scheme 2 or FDM scheme A or FDM scheme B of the multi-TRP PUSCH transmission is determined according to the 'antenna port(s)' field and the higher layer parameter *repetitionScheme,* the SRI field indicates which UL TCI state is applied to which PUSCH transmission occasion or which part of the scheduled PUSCH transmission.

A third embodiment relates to dynamic switching between single-panel/TRP based PUSCH scheme and multi-panel/TRP based PUSCH scheme (i.e. identify which of the single-panel/TRP PUSCH transmission and the multi-panel/TRP PUSCH transmission is scheduled) when one SRS resource set for nCB is configured in a BWP of a cell. For nCB based PUSCH transmission, the one SRS resource set contains up to 8 SRS resources. The 8 SRS resources in the one SRS resource set can be divided into a first half and a second half.

An 8-bit SRI field is contained in the scheduling DCI format 0_1 or 0_2. The 8-bit SRI field has up to 160 different SRI field values, each of which indicates a combination of one or two or three or four SRS resources from the 8 SRS resources contained in the one SRS resource set.

If all the indicated SRS resource(s) are from the first half or the second half (of the SRS resources in the one SRS resource set), single-panel/TRP based PUSCH scheme is determined. It means that single-panel/TRP PUSCH transmission is scheduled, i.e., the scheduled PUSCH transmission is transmitted by a single panel.

In particular, if all the indicated SRS resource(s) are from the first half, the first UL TCI state is applied to the scheduled PUSCH transmission.

If all the indicated SRS resource(s) are from the second half, the second UL TCI state is applied to the scheduled PUSCH transmission.

If the indicated SRS resources are from both the first half and the second half (of the SRS resources in the SRS resource set), multi-panel/TRP based PUSCH scheme is determined. It means that the scheduled PUSCH transmission is transmitted by using both the first UL TCI state and the second UL TCI state.

If *repetitionScheme* is not configured or *repetitionScheme* is configured and is set as 'fdmSchemeA' or 'fdmSchemeB' and the 'antenna port(s)' field indicates two CDM groups (e.g. a first CDM group and a second CDM group), different PUSCH layers of the scheduled PUSCH transmission are transmitted by different panels. The PUSCH layer(s) to be transmitted by the first panel are the PUSCH layer(s) each of which is associated with an indicated DMRS port within the first CDM group (which contains the first DMRS port indicated by the 'antenna port(s)' field), and the PUSCH layer(s) to be transmitted by the second panel are the PUSCH layer(s) each of which is associated an indicated DMRS port within the second CDM group (i.e. the other CDM group than the first CDM group). The first UL TCI state is applied to the PUSCH layer(s) each of which is associated with an indicated DMRS port within the first CDM group, and the second UL TCI state is applied to the PUSCH layer(s) each of which is associated with an indicated DMRS port within the second CDM group.

If *repetitionScheme* is configured and is set as 'sdmSchemeA', the UE shall transmit two PUSCH transmission occasions (e.g. a first PUSCH transmission occasion and a second PUSCH transmission occasion, which are the same) of a same TB, where the first PUSCH transmission occasion is associated with the indicated SRS resource(s) from the first half of the SRS resource(s) in the one SRS resource set, and the second PUSCH transmission occasion is associated with the indicated SRS resource(s) from the second half of the SRS resource(s) in the one SRS resource set. The first UL TCI state is applied to the first PUSCH transmission occasion (associated with the indicated SRS resource(s) from the first half of the SRS resource(s) in the one SRS resource set), and the second UL TCI state is applied to the second PUSCH transmission occasion (associated with the indicated SRS resource(s) form the second half of the SRS resource(s) in the SRS resource set).

If *repetitionScheme* is configured and is set as 'fdmSchemeA' and the 'antenna port(s)' field indicates one CDM group, the UE shall transmit a single PUSCH transmission occasion of a TB. That is, the single (or one) PUSCH transmission occasion is mapped to two non-overlapping frequency domain resource allocations (e.g. a first frequency domain resource allocation of the one PUSCH transmission occasion and a second frequency domain resource allocation of the one PUSCH transmission occasion) corresponding to two panels associate with different UL TCI states. The first UL TCI state is applied to the first frequency domain resource allocation of the one PUSCH transmission occasion, and the second UL TCI state is applied to the second frequency domain resource allocation of the one PUSCH transmission occasion.

If *repetitionScheme* is configured and is set as 'fdmSchemeB' and the 'antenna port(s)' field indicates one CDM group, the UE shall transmit two PUSCH transmission occasions (e.g. a first PUSCH transmission occasion and a second PUSCH transmission occasion) of a same TB. The two PUSCH transmission occasions are mapped to two non-overlapping frequency domain resource allocations corresponding two panels associated with different UL TCI states. That is, the first PUSCH transmission occasion is mapped to a first frequency domain resource allocation for one panel, and the second PUSCH transmission occasion is mapped to a second frequency domain resource allocation for the other panel, wherein the first frequency domain resource allocation and the second frequency domain resource allocation are non-overlapping. The first UL TCI state is applied to the first PUSCH transmission occasion associated with the first frequency domain resource allocation, and the second UL TCI state is applied to the second PUSCH transmission occasion associated with the second frequency domain resource allocation.

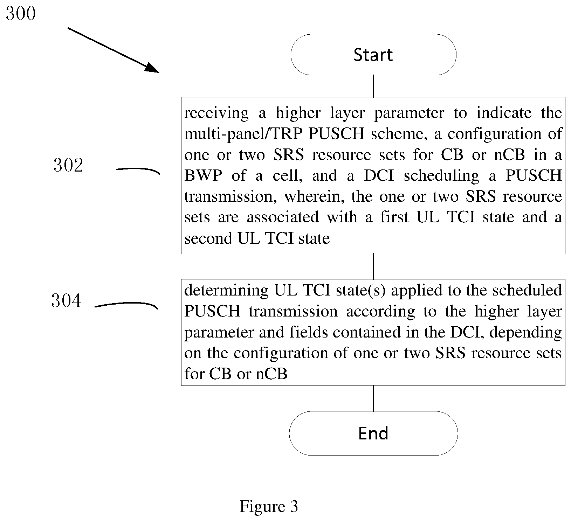

Figure 3 is a schematic flow chart diagram illustrating an embodiment of a method 300 according to the present application. In some embodiments, the method 300 is performed by an apparatus, such as a remote unit (e.g. UE). In certain embodiments, the method 300 may be performed by a processor executing program code, for example, a microcontroller, a microprocessor, a CPU, a GPU, an auxiliary processing unit, a FPGA, or the like.

The method 300 is a method of a UE, comprising: 302 receiving a higher layer parameter to indicate the multi-panel/TRP PUSCH scheme, a configuration of one or two SRS resource sets for CB or nCB in a BWP of a cell, and a DCI scheduling a PUSCH transmission, wherein, the one or two SRS resource sets are associated with a first UL TCI state and a second UL TCI state; and 304 determining UL TCI state(s) applied to the scheduled PUSCH transmission according to the higher layer parameter and fields contained in the DCI, depending on the configuration of one or two SRS resource sets for CB or nCB.

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

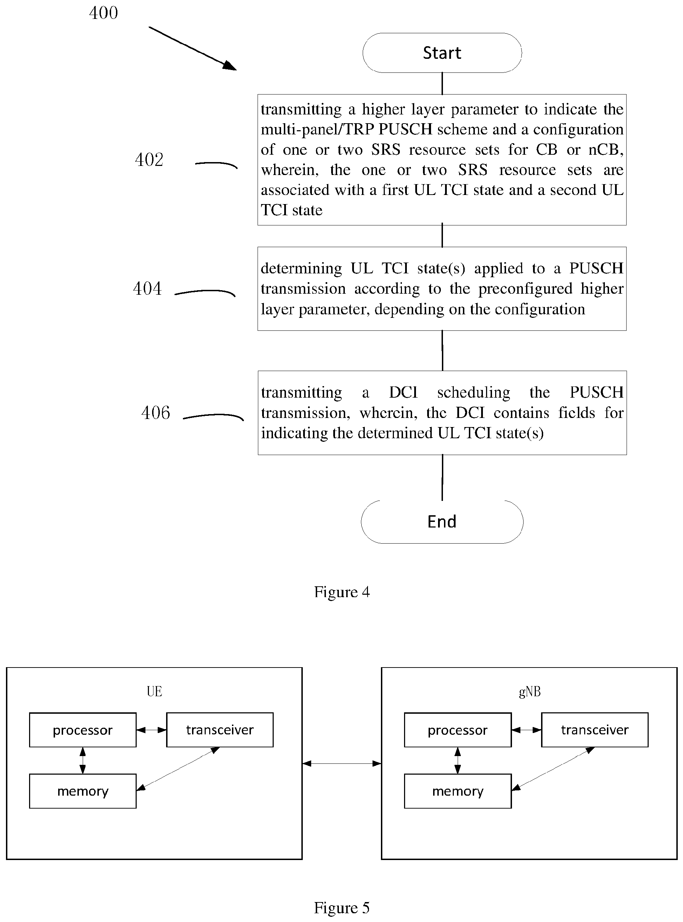

Figure 4 is a schematic flow chart diagram illustrating an embodiment of a method 400 according to the present application. In some embodiments, the method 400 is performed by an apparatus, such as a base unit. In certain embodiments, the method 400 may be performed by a processor executing program code, for example, a microcontroller, a microprocessor, a CPU, a GPU, an auxiliary processing unit, a FPGA, or the like.

The method 400 may comprise 402 transmitting a higher layer parameter to indicate the multi-panel/TRP PUSCH scheme and a configuration of one or two SRS resource sets for CB or nCB, wherein, the one or two SRS resource sets are associated with a first UL TCI state and a second UL TCI state; 404 determining UL TCI state(s) applied to a PUSCH transmission according to the preconfigured higher layer parameter, depending on the configuration; and 406 transmitting a DCI scheduling the PUSCH transmission, wherein, the DCI contains fields for indicating the determined UL TCI state(s).

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

Figure 5 is a schematic block diagram illustrating apparatuses according to one embodiment.

Referring to Figure 5, the UE (i.e. the remote unit) includes a processor, a memory, and a transceiver. The processor implements a function, a process, and/or a method which are proposed in Figure 3.

The UE comprises a transceiver; and a processor coupled to the transceiver, wherein the processor is configured to receive, via the transceiver, a higher layer parameter to indicate the multi-panel/TRP PUSCH scheme, a configuration of one or two SRS resource sets for CB or nCB in a BWP of a cell, and a DCI scheduling a PUSCH transmission, wherein, the one or two SRS resource sets are associated with a first UL TCI state and a second UL TCI state; and determine UL TCI state(s) applied to the scheduled PUSCH transmission according to the higher layer parameter and fields contained in the DCI, depending on the configuration of one or two SRS resource sets for CB or nCB.

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

The gNB (i.e. the base unit) includes a processor, a memory, and a transceiver. The processor implements a function, a process, and/or a method which are proposed in Figure 4.

The base unit comprises a transceiver; and a processor coupled to the transceiver, wherein the processor is configured to transmit, via the transceiver, a higher layer parameter to indicate the multi-panel/TRP PUSCH scheme and a configuration of one or two SRS resource sets for CB or nCB, wherein, the one or two SRS resource sets are associated with a first UL TCI state and a second UL TCI state; determine UL TCI state(s) applied to a PUSCH transmission according to the preconfigured higher layer parameter, depending on the configuration; and transmit, via the transceiver, a DCI scheduling the PUSCH transmission, wherein, the DCI contains fields for indicating the determined UL TCI state(s).

In some embodiment, if the configuration is two SRS resource sets for CB or nCB, and the two SRS resource sets include a first SRS resource set associated with a first UL TCI state and a second SRS resource set associated with a second UL TCI state, then, an SRS resource set indicator (SRSI) field contained in the DCI determines the scheduled PUSCH transmission is a single-panel/TRP PUSCH transmission or a multi-panel/TRP PUSCH transmission. If a field value of the SRSI field is '00' or '01', the scheduled PUSCH transmission is a single-panel/TRP PUSCH transmission. In particular, if the field value of the SRSI field is '00', the first UL TCI state is applied to the scheduled PUSCH transmission, and if the field value of the SRSI field is '01', the second UL TCI state is applied to the scheduled PUSCH transmission. If a field value of the SRSI field is '10' or '11', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of the SRSI field is '10', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the SRSI field is '11', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then, a PUSCH scheme field contained in the DCI determines the scheduled PUSCH transmission is a single-panel/TRP PUSCH transmission or a multi-panel/TRP PUSCH transmission. If a field value of the PUSCH scheme field is '0', the scheduled PUSCH transmission is a single-panel/TRP PUSCH transmission. In particular, if the field value of a 1-bit SRI field is '0', the first UL TCI state is applied to the scheduled PUSCH transmission, and if the field value of the 1-bit SRI field is '1', the second UL TCI state is applied to the scheduled PUSCH transmission. If a field value of the PUSCH scheme field is '1', the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, if the field value of a 1-bit SRI field is '0', the first UL TCI state is applied to the PUSCH layer(s) of the scheduled PUSCH transmission each of which is associated with an indicated DMRS port within the first CDM group, and the second UL TCI state is applied to the PUSCH layer(s) of the scheduled PUSCH transmission each of which is associated with an indicated DMRS port within the second CDM group, and if the field value of the 1-bit SRI field is '1', the first UL TCI state is applied to the PUSCH layer(s) of the scheduled PUSCH transmission each of which is associated with an indicated DMRS port within the second CDM group, and the second UL TCI state is applied to the PUSCH layer(s) of the scheduled PUSCH transmission each of which is associated with an indicated DMRS port within the first CDM group, (2) if the higher layer parameter is configured as is set as 'sdmSchemeA', then, both the first UL TCI state and the second UL TCI state are applied to the scheduled PUSCH transmission, (3) if the 'antenna port(s)' field of the DCI indicates only DMRS port(s) within the first CDM group, and the higher layer parameter is configured as is set as 'fdmSchemeA', then, if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and (4) if the 'antenna port(s)' field of the DCI indicates only DMRS port(s) within the first CDM group, and the higher layer parameter is configured as is set as 'fdmSchemeB', then, if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

In some embodiment, if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then, an 8-bit SRI field contained in the DCI determines the scheduled PUSCH transmission is a single-panel/TRP PUSCH transmission or a multi-panel/TRP PUSCH transmission. If the SRS resource(s) indicated by the 8-bit SRI field are only from the first half or the second half, the scheduled PUSCH transmission is a single-panel/TRP PUSCH transmission. In particular, if the indicated SRS resource(s) are only from the first half, the first UL TCI state is applied to the scheduled PUSCH transmission, and if the indicated SRS resource(s) are only from the second half, the second UL TCI state is applied to the scheduled PUSCH transmission. If the SRS resources indicated by the 8-bit SRI field are from both the first half and the second half, the scheduled PUSCH transmission is a multi-panel/TRP PUSCH transmission. In particular, (1) if an 'antenna port(s)' field of the DCI indicates DMRS port(s) within a first CDM group and DMRS port(s) within a second CDM group, and the higher layer parameter is not configured or is configured as is set as 'fdmSchemeA' or 'fdmSchemeB', then, the first UL TCI state is applied to the PUSCH layer(s) of the scheduled PUSCH transmission each of which is associated with an indicated DMRS port

within the first CDM group, and the second UL TCI state is applied to the PUSCH layer(s) of the scheduled PUSCH transmission each of which is associated with an indicated DMRS port within the second CDM group, (2) if the higher layer parameter is configured as is set as 'sdmSchemeA', then, the first UL TCI state is applied to a first PUSCH transmission occasion associated with the indicated SRS resource(s) from the first half, and the second UL TCI state is applied to a second PUSCH transmission occasion associated with the indicated SRS resource(s) from the second half, (3) if the 'antenna port(s)' field of the DCI indicates only DMRS port(s) within the first CDM group, and the higher layer parameter is configured as is set as 'fdmSchemeA', then, the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and (4) if the 'antenna port(s)' field of the DCI indicates only DMRS port(s) within the first CDM group, the higher layer parameter is configured as is set as 'fdmSchemeB', then, the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment. It is apparent that the claims that are not expressly cited in the claims are combined to form an embodiment or be included in a new claim.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated in the appended claims rather than by the foregoing description.

## Claims

1. A user equipment, UE, for wireless communication, the UE comprising:
at least one memory; and
at least one processor coupled with the at least one memory and configured to cause the UE to
receive (302) a higher layer parameter which indicates a multi-panel/transmission reception point, TRP, Physical Uplink Shared Channel, PUSCH, scheme, a configuration of two sounding reference signal, SRS, resource sets for codebook, CB, or non-codebook, nCB, based uplink transmission in a bandwidth part, BWP, of a cell, and a Downlink Control Information, DCI, scheduling a PUSCH transmission, wherein the two SRS resource sets are associated with a first uplink, UL, Transmission Configuration Indicator, TCI, state and a second UL TCI state; and
determine (304) UL TCI states applied to the scheduled PUSCH transmission according to the higher layer parameter and one or more fields contained in the DCI, depending on the configuration of the two SRS resource sets for CB or nCB, wherein when a field value in the DCI is '00' or '01', the first or the second TCI state respectively is applied to the scheduled PUSCH transmission.

2. The UE of claim 1, wherein:
the two SRS resource sets include a first SRS resource set associated with a first UL TCI state and a second SRS resource set associated with a second UL TCI state, and:
an SRS resource set indicator, SRSI, field contained in the DCI determines the scheduled PUSCH transmission is a single-panel/TRP PUSCH transmission or a multi-panel/TRP PUSCH transmission.

3. The UE of claim 2, wherein:
if a field value of the SRSI field is '00' or '01', the scheduled PUSCH transmission is a single-panel/TRP PUSCH transmission; and
if the field value of the SRSI field is '10' or '11', the scheduled PUSCH transmission is a multi-panel/TRP PUSCH transmission.

4. The UE of claim 3, wherein:
if the field value of the SRSI field is '00', the first UL TCI state is applied to the scheduled PUSCH transmission, and
if the field value of the SRSI field is '01', the second UL TCI state is applied to the scheduled PUSCH transmission.

5. The UE of claim 3, wherein:
if an 'antenna port(s)' field of the DCI indicates one or more demodulation reference signal, DMRS, ports within a first code division multiplexing, CDM, group and one or more DMRS ports within a second CDM group, and the higher layer parameter is not configured or is configured and is set as 'fdmSchemeA' or 'fdmSchemeB', then:
if the field value of the SRSI field is '10', the first UL TCI state is applied to one or more PUSCH layers of the scheduled PUSCH transmission each of which is associated with the indicated DMRS port within the first CDM group, and the second UL TCI state is applied to one or more PUSCH layers of the scheduled PUSCH transmission each of which is associated with the indicated DMRS port within the second CDM group, and
if the field value of the SRSI field is '11', the first UL TCI state is applied to one or more PUSCH layers of the scheduled PUSCH transmission each of which is associated with an indicated DMRS port within the second CDM group, and the second UL TCI state is applied to one or more PUSCH layers of the scheduled PUSCH transmission each of which is associated with the indicated DMRS port within the first CDM group,
if the higher layer parameter is configured and is set as 'sdmSchemeA', then: both the first UL TCI state and the second UL TCI state are applied to the scheduled PUSCH transmission,
if the 'antenna port(s)' field of the DCI indicates only one or more DMRS ports within the first CDM group, and the higher layer parameter is configured and is set as 'fdmSchemeA', then:
if the field value of the SRSI field is '10', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and
if the field value of the SRSI field is '11', the first UL TCI state is applied to the second frequency domain resource allocation of the scheduled PUSCH transmission, and the second UL TCI state is applied to the first frequency domain resource allocation of the scheduled PUSCH transmission, and
if the 'antenna port(s)' field of the DCI indicates only one or more DMRS ports within the first CDM group, and the higher layer parameter is configured and is set as 'fdmSchemeB', then:
if the field value of the SRSI field is '10', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and
if the field value of the SRSI field is '11', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

6. The UE of claim 1, wherein:
if the configuration is one SRS resource set for CB and the one SRS resource set includes a first SRS resource associated with the first UL TCI state and a second SRS resource associated with the second UL TCI state or includes first two SRS resources associated with the first UL TCI state and last two SRS resources associated with the second UL TCI state, then
a PUSCH scheme field contained in the DCI determines the scheduled PUSCH transmission is a single-panel/TRP PUSCH transmission or a multi-panel/TRP PUSCH transmission.

7. The UE of claim 6, wherein:
if a field value of the PUSCH scheme field is '0', the scheduled PUSCH transmission is a single-panel/TRP PUSCH transmission; and
if the field value of the PUSCH scheme field is '1', the scheduled PUSCH transmission is a multi-panel/TRP PUSCH transmission.

8. The UE of claim 7, wherein:
if a field value of a 1-bit SRS resource indicator, SRI, field is '0', the first UL TCI state is applied to the scheduled PUSCH transmission, and
if the field value of the 1-bit SRI field is '1', the second UL TCI state is applied to the scheduled PUSCH transmission.

9. The UE of claim 7, wherein:
if an 'antenna port(s)' field of the DCI indicates one or more DMRS ports within a first CDM group and one or more DMRS ports within a second CDM group, and the higher layer parameter is not configured or is configured and is set as 'fdmSchemeA' or 'fdmSchemeB', then:
if the field value of a 1-bit SRI field is '0', the first UL TCI state is applied to one or more PUSCH layers of the scheduled PUSCH transmission each of which is associated with an indicated DMRS port within the first CDM group, and the second UL TCI state is applied to one or more PUSCH layers of the scheduled PUSCH transmission each of which is associated with an indicated DMRS port within the second CDM group, and
if the field value of the 1-bit SRI field is '1', the first UL TCI state is applied to one or more PUSCH layers of the scheduled PUSCH transmission each of which is associated with an indicated DMRS port within the second CDM group, and the second UL TCI state is applied to one or more PUSCH layers of the scheduled PUSCH transmission each of which is associated with an indicated DMRS port within the first CDM group,
if the higher layer parameter is configured and is set as 'sdmSchemeA', then both the first UL TCI state and the second UL TCI state are applied to the scheduled PUSCH transmission,
if the 'antenna port(s)' field of the DCI indicates only one or more DMRS ports within the first CDM group, and the higher layer parameter is configured and is set as 'fdmSchemeA', then:
if the field value of the 1-bit SRI field is '0', the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and
if the field value of the 1-bit SRI field is '1', the first UL TCI state is applied to the second frequency domain resource allocation of the scheduled PUSCH transmission, and the second UL TCI state is applied to the first frequency domain resource allocation of the scheduled PUSCH transmission, and
if the 'antenna port(s)' field of the DCI indicates only DMRS port(s) within the first CDM group, and the higher layer parameter is configured and is set as 'fdmSchemeB', then:
if the field value of the 1-bit SRI field is '0', the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation, and
if the field value of the 1-bit SRI field is '1', the first UL TCI state is applied to the second PUSCH transmission occasion of the scheduled PUSCH transmission associated with the second frequency domain resource allocation, and the second UL TCI state is applied to the first PUSCH transmission occasion of the scheduled PUSCH transmission associated with the first frequency domain resource allocation.

10. The UE of claim 1, wherein:
if the configuration is one SRS resource set for nCB, the one SRS resource set includes up to 8 SRS resources, and a first half of the up to 8 SRS resources is associated with the first UL TCI state and a second half of the up to 8 SRS resources is associated with the second UL TCI state, then:
an 8-bit SRI field contained in the DCI determines the scheduled PUSCH transmission is a single-panel/TRP PUSCH transmission or a multi-panel/TRP PUSCH transmission.

11. The UE of claim 10, wherein:
if the SRS resources indicated by the 8-bit SRI field are only from the first half or the second half, the scheduled PUSCH transmission is a single-panel/TRP PUSCH transmission; and
if the SRS resources indicated by the 8-bit SRI field are from both the first half and the second half, the scheduled PUSCH transmission is a multi-panel/TRP PUSCH transmission.

12. The UE of claim 11, wherein:
if the indicated SRS resources are only from the first half, the first UL TCI state is applied to the scheduled PUSCH transmission, and
if the indicated SRS resources are only from the second half, the second UL TCI state is applied to the scheduled PUSCH transmission.

13. The UE of claim 11, wherein:
if an 'antenna port(s)' field of the DCI indicates one or more DMRS ports within a first CDM group and one or more DMRS ports within a second CDM group, and the higher layer parameter is not configured or is configured and is set as 'fdmSchemeA' or 'fdmSchemeB', then the first UL TCI state is applied to one or more PUSCH layers of the scheduled PUSCH transmission each of which is associated with an indicated DMRS port within the first CDM group, and the second UL TCI state is applied to one or more PUSCH layers of the scheduled PUSCH transmission each of which is associated with an indicated DMRS port within the second CDM group,
if the higher layer parameter is configured and is set as 'sdmSchemeA', then the first UL TCI state is applied to a first PUSCH transmission occasion associated with the indicated SRS resources from the first half, and the second UL TCI state is applied to a second PUSCH transmission occasion associated with the indicated SRS resources from the second half,
if the 'antenna port(s)' field of the DCI indicates only one or more DMRS ports within the first CDM group, and the higher layer parameter is configured and is set as 'fdmSchemeA', then the first UL TCI state is applied to a first frequency domain resource allocation of the scheduled PUSCH transmission, and the second UL TCI state is applied to a second frequency domain resource allocation that is not overlapped with the first frequency domain resource allocation of the scheduled PUSCH transmission, and
if the 'antenna port(s)' field of the DCI indicates only one or more DMRS ports within the first CDM group, the higher layer parameter is configured and is set as 'fdmSchemeB', then the first UL TCI state is applied to a first PUSCH transmission occasion of the scheduled PUSCH transmission associated with a first frequency domain resource allocation, and the second UL TCI state is applied to a second PUSCH transmission occasion of the scheduled PUSCH transmission associated with a second frequency domain resource allocation that is not overlapped with the first frequency domain resource allocation.

14. A method performed by a user equipment, UE, the method comprising:
receiving (302) a higher layer parameter which indicates a multi-panel/ transmission reception point, TRP, Physical Uplink Shared Channel, PUSCH, scheme, a configuration of two sounding reference signal, SRS, resource sets for codebook, CB, or non-codebook, nCB, based uplink transmission in a bandwidth part, BWP, of a cell, and a Downlink Control Information, DCI, scheduling a PUSCH transmission, wherein the two SRS resource sets are associated with a first uplink, UL, Transmission Configuration Indicator, TCI, state and a second UL TCI state; and
determining (304) UL TCI states applied to the scheduled PUSCH transmission according to the higher layer parameter and one or more fields contained in the DCI, depending on the configuration of the two SRS resource sets for CB or nCB, wherein when a field value in the DCI is '00' or '01', the first or the second TCI state respectively is applied to the scheduled PUSCH transmission.

15. A base station for wireless communication, the base station comprising:
at least one memory;
and at least one processor coupled with the at least one memory and configured to cause the base station to:
transmit (402) a higher layer parameter to indicate a multi-panel/ transmission reception point, TRP, Physical Uplink Shared Channel, PUSCH, scheme and a configuration of two sounding reference signal, SRS, resource sets for codebook, CB, or non-codebook, nCB, based uplink transmission, wherein the two SRS resource sets are associated with a first uplink, UL, Transmission Configuration Indicator, TCI, state and a second UL TCI state;
determine (404) UL TCI states applied to a PUSCH transmission according to the higher layer parameter, depending on the configuration; and
transmit (406) a Downlink Control Information, DCI, scheduling the PUSCH transmission, wherein the DCI contains fields for indicating the determined UL TCI states, wherein when a field value in the DCI is '00' or '01', the first or the second TCI state respectively is to be applied to a scheduled PUSCH transmission.

## Patentansprüche

1. Endgerät, UE, zur drahtlosen Kommunikation, wobei das UE umfasst:
mindestens einen Speicher; und
mindestens einen Prozessor, der mit dem mindestens einen Speicher gekoppelt ist und dazu konfiguriert ist, das UE zu veranlassen zum
Empfangen (302) eines höherschichtigen Parameters, der ein Schema eines Multi-Panel-/ Sende-Empfangs-Punkt-, TRP, gemeinsam genutzten physikalischen Uplink-Kanals, PUSCH, eine Konfiguration von zwei Sondierungsreferenzsignal-, SRS, Ressourcensätzen für eine Codebuch-, CB, oder Nicht-Codebuch-, nCB, basierte Uplink-Sendung in einem Bandbreitenteil, BWP, einer Zelle und Downlink-Steuerinformationen, DCI, die eine PUSCH-Sendung einplanen, angibt, wobei die beiden SRS-Ressourcensätze einem ersten Zustand eines Uplink-, UL, Sendekonfigurationsindikators, TCI, und einem zweiten UL-TCI-Zustand zugeordnet sind; und
Bestimmen (304) der UL-TCI-Zustände, die auf die eingeplante PUSCH-Sendung angewendet werden, gemäß dem höherschichtigen Parameter und einem oder mehreren Feldern, die in den DCI enthalten sind, in Abhängigkeit von der Konfiguration der beiden SRS-Ressourcensätze für CB oder nCB, wobei, wenn ein Feldwert in den DCI '00' oder '01' ist, jeweils der erste oder der zweite TCI-Zustand auf die eingeplante PUSCH-Sendung angewendet wird.

2. UE nach Anspruch 1, wobei:
die beiden SRS-Ressourcensätze einen ersten SRS-Ressourcensatz, der einem ersten UL-TCI-Zustand zugeordnet ist, und einen zweiten SRS-Ressourcensatz, der einem zweiten UL-TCI-Zustand zugeordnet ist, umfassen, und:
ein SRS-Ressourcensatzindikator-, SRSI, Feld, das in den DCI enthalten ist, bestimmt, dass die eingeplante PUSCH-Sendung eine Einzel-Panel-/ TRP-PUSCH-Sendung oder eine Multi-Panel-/ TRP-PUSCH-Sendung ist.

3. UE nach Anspruch 2, wobei:
falls ein Feldwert des SRSI-Feldes '00' oder '01' ist, die eingeplante PUSCH-Sendung eine Einzel-Panel-/ TRP-PUSCH-Sendung ist; und
falls der Feldwert des SRSI-Feldes '10' oder '11' ist, die eingeplante PUSCH-Sendung eine Multi-Panel-/ TRP-PUSCH-Sendung ist.

4. UE nach Anspruch 3, wobei:
falls der Feldwert des SRSI-Feldes '00' ist, der erste UL-TCI-Zustand auf die eingeplante PUSCH-Sendung angewendet wird, und
falls der Feldwert des SRSI-Feldes '01' ist, der zweite UL-TCI-Zustand auf die eingeplante PUSCH-Sendung angewendet wird.

5. UE nach Anspruch 3, wobei:
falls ein Feld 'Antennenanschluss/-anschlüsse' der DCI einen oder mehrere Demodulationsreferenzsignal-, DMRS, Anschlüsse in einer ersten Codemultiplex-, CDM, Gruppe und einen oder mehrere DMRS-Anschlüsse in einer zweiten CDM-Gruppe angibt, und der höherschichtige Parameter nicht konfiguriert ist oder konfiguriert ist und auf 'fdmSchemeA' oder 'fdmSchemeB' eingestellt ist, dann:
falls der Feldwert des SRSI-Feldes '10' ist, der erste UL-TCI-Zustand auf eine oder mehrere PUSCH-Schichten der eingeplanten PUSCH-Sendung angewendet wird, die jeweils dem angegebenen DMRS-Anschluss in der ersten CDM-Gruppe zugeordnet sind, und der zweite UL-TCI-Zustand auf eine oder mehrere PUSCH-Schichten der eingeplanten PUSCH-Sendung angewendet wird, die jeweils dem angegebenen DMRS-Anschluss in der zweiten CDM-Gruppe zugeordnet sind, und
falls der Feldwert des SRSI-Feldes '11' ist, der erste UL-TCI-Zustand auf eine oder mehrere PUSCH-Schichten der eingeplanten PUSCH-Sendung angewendet wird, die jeweils einem angegebenen DMRS-Anschluss in der zweiten CDM-Gruppe zugeordnet sind, und der zweite UL-TCI-Zustand auf eine oder mehrere PUSCH-Schichten der eingeplanten PUSCH-Sendung angewendet wird, die jeweils dem angegebenen DMRS-Anschluss in der ersten CDM-Gruppe zugeordnet sind,
falls der höherschichtige Parameter konfiguriert ist und auf 'sdmSchemeA' eingestellt ist, dann: sowohl der erste UL-TCI-Zustand als auch der zweite UL-TCI-Zustand auf die eingeplante PUSCH-Sendung angewendet werden,
falls das Feld 'Antennenanschluss/-anschlüsse' der DCI nur einen oder mehrere DMRS-Anschlüsse in der ersten CDM-Gruppe angibt, und der höherschichtige Parameter konfiguriert ist und auf 'fdmSchemeA', eingestellt ist, dann:
falls der Feldwert des SRSI-Feldes '10' ist, der erste UL-TCI-Zustand auf eine erste Zuteilung von Frequenzbereichsressourcen der eingeplanten PUSCH-Sendung angewendet wird, und der zweite UL-TCI-Zustand auf eine zweite Zuteilung von Frequenzbereichsressourcen angewendet wird, die sich nicht mit der ersten Zuteilung von Frequenzbereichsressourcen der eingeplanten PUSCH-Sendung überlappt, und
falls der Feldwert des SRSI-Feldes '11' ist, der erste UL-TCI-Zustand auf die zweite Zuteilung von Frequenzbereichsressourcen der eingeplanten PUSCH-Sendung angewendet wird, und der zweite UL-TCI-Zustand auf die erste Zuteilung von Frequenzbereichsressourcen der eingeplanten PUSCH-Sendung angewendet wird, und
falls das Feld 'Antennenanschluss/-anschlüsse' der DCI nur einen oder mehrere DMRS-Anschlüsse in der ersten CDM-Gruppe angibt, und der höherschichtige Parameter konfiguriert ist und auf 'fdmSchemeB' eingestellt ist, dann:
falls der Feldwert des SRSI-Feldes '10' ist, der erste UL-TCI-Zustand auf eine erste PUSCH-Sendegelegenheit der eingeplanten PUSCH-Sendung angewendet wird, die einer ersten Zuteilung von Frequenzbereichsressourcen zugeordnet ist, und der zweite UL-TCI-Zustand auf eine zweite PUSCH-Sendegelegenheit der eingeplanten PUSCH-Sendung angewendet wird, die einer zweiten Zuteilung von Frequenzbereichsressourcen zugeordnet ist, die sich nicht mit der ersten Zuteilung von Frequenzbereichsressourcen überlappt, und
falls der Feldwert des SRSI-Feldes '11' ist, der erste UL-TCI-Zustand auf die zweite PUSCH-Sendegelegenheit der eingeplanten PUSCH-Sendung angewendet wird, die der zweiten Zuteilung von Frequenzbereichsressourcen zugeordnet ist, und der zweite UL-TCI-Zustand auf die erste PUSCH-Sendegelegenheit der eingeplanten PUSCH-Sendung angewendet wird, die der ersten Zuteilung von Frequenzbereichsressourcen zugeordnet ist.

6. UE nach Anspruch 1, wobei:
falls die Konfiguration ein SRS-Ressourcensatz für CB ist und der eine SRS-Ressourcensatz eine erste SRS-Ressource, die dem ersten UL-TCI-Zustand zugeordnet ist, und eine zweite SRS-Ressource, die dem zweiten UL-TCI-Zustand zugeordnet ist, umfasst oder zwei erste SRS-Ressourcen, die dem ersten UL-TCI-Zustand zugeordnet sind, und zwei letzte SRS-Ressourcen, die dem zweiten UL-TCI-Zustand zugeordnet sind, umfasst, dann
ein PUSCH-Schema-Feld, das in den DCI enthalten ist, bestimmt, dass die eingeplante PUSCH-Sendung eine Einzel-Panel-/ TRP-PUSCH-Sendung oder eine Multi-Panel-/ TRP-PUSCH-Sendung ist.

7. UE nach Anspruch 6, wobei:
falls ein Feldwert des PUSCH-Schema-Feldes '0' ist, die eingeplante PUSCH-Sendung eine Einzel-Panel-/ TRP-PUSCH-Sendung ist; und
falls der Feldwert des PUSCH-Schema-Feldes '1' ist, die eingeplante PUSCH-Sendung eine Multi-Panel-/ TRP-PUSCH-Sendung ist.

8. UE nach Anspruch 7, wobei:
falls ein Feldwert eines 1-Bit-SRS-Ressourcenindikator-, SRI, Feldes '0' ist, der erste UL-TCI-Zustand auf die eingeplante PUSCH-Sendung angewendet wird, und
falls der Feldwert des 1-Bit-SRI-Feldes '1' ist, der zweite UL-TCI-Zustand auf die eingeplante PUSCH-Sendung angewendet wird.

9. UE nach Anspruch 7, wobei:
falls ein Feld 'Antennenanschluss/-anschlüsse' der DCI einen oder mehrere DMRS-Anschlüsse in einer ersten CDM-Gruppe und einen oder mehrere DMRS-Anschlüsse in einer zweiten CDM-Gruppe angibt, und der höherschichtige Parameter nicht konfiguriert ist oder konfiguriert ist und auf 'fdmSchemeA' oder 'fdmSchemeB' eingestellt ist, dann:
falls der Feldwert eines 1-Bit-SRI-Feldes '0' ist, der erste UL-TCI-Zustand auf eine oder mehrere PUSCH-Schichten der eingeplanten PUSCH-Sendung angewendet wird, die jeweils einem angegebenen DMRS-Anschluss in der ersten CDM-Gruppe zugeordnet sind, und der zweite UL-TCI-Zustand auf eine oder mehrere PUSCH-Schichten der eingeplanten PUSCH-Sendung angewendet wird, die jeweils einem angegebenen DMRS-Anschluss in der zweiten CDM-Gruppe zugeordnet sind, und
falls der Feldwert des 1-Bit-SRI-Feldes '1' ist, der erste UL-TCI-Zustand auf eine oder mehrere PUSCH-Schichten der eingeplanten PUSCH-Sendung angewendet wird, die jeweils einem angegebenen DMRS-Anschluss in der zweiten CDM-Gruppe zugeordnet sind, und der zweite UL-TCI-Zustand auf eine oder mehrere PUSCH-Schichten der eingeplanten PUSCH-Sendung angewendet wird, die jeweils einem angegebenen DMRS-Anschluss in der ersten CDM-Gruppe zugeordnet sind,
falls der höherschichtige Parameter konfiguriert ist und auf 'sdmSchemeA' eingestellt ist, dann sowohl der erste UL-TCI-Zustand als auch der zweite UL-TCI-Zustand auf die eingeplante PUSCH-Sendung angewendet werden,
falls das Feld 'Antennenanschluss/-anschlüsse' der DCI nur einen oder mehrere DMRS-Anschlüsse in der ersten CDM-Gruppe angibt, und der höherschichtige Parameter konfiguriert ist und auf 'fdmSchemeA' eingestellt ist, dann:
falls der Feldwert des 1-Bit-SRI-Feldes '0' ist, der erste UL-TCI-Zustand auf eine erste Zuteilung von Frequenzbereichsressourcen der geplanten PUSCH-Sendung angewendet wird, und der zweite UL-TCI-Zustand auf eine zweite Zuteilung von Frequenzbereichsressourcen angewendet wird, die sich nicht mit der ersten Zuteilung von Frequenzbereichsressourcen der eingeplanten PUSCH-Sendung überlappt, und
falls der Feldwert des 1-Bit-SRI-Feldes '1' ist, der erste UL-TCI-Zustand auf die zweite Zuteilung von Frequenzbereichsressourcen der eingeplanten PUSCH-Sendung angewendet wird, und der zweite UL-TCI-Zustand auf die erste Zuteilung von Frequenzbereichsressourcen der eingeplanten PUSCH-Sendung angewendet wird, und
falls das Feld 'Antennenanschluss/-anschlüsse' der DCI nur einen oder mehrere DMRS-Anschlüsse in der ersten CDM-Gruppe angibt, und der höherschichtige Parameter konfiguriert ist und auf 'fdmSchemeB' eingestellt ist, dann:
falls der Feldwert des 1-Bit-SRI-Feldes '0' ist, der erste UL-TCI-Zustand auf eine erste PUSCH-Sendegelegenheit der eingeplanten PUSCH-Sendung angewendet wird, die einer ersten Zuteilung von Frequenzbereichsressourcen zugeordnet ist, und der zweite UL-TCI-Zustand auf eine zweite PUSCH-Sendegelegenheit der eingeplanten PUSCH-Sendung angewendet wird, die einer zweiten Zuteilung von Frequenzbereichsressourcen zugeordnet ist, die sich nicht mit der ersten Zuteilung von Frequenzbereichsressourcen überlappt, und
falls der Feldwert des 1-Bit-SRI-Feldes '1' ist, der erste UL-TCI-Zustand auf die zweite PUSCH-Sendegelegenheit der eingeplanten PUSCH-Sendung angewendet wird, die der zweiten Zuteilung von Frequenzbereichsressourcen zugeordnet ist, und der zweite UL-TCI-Zustand auf die erste PUSCH-Sendegelegenheit der eingeplanten PUSCH-Sendung angewendet wird, die der ersten Zuteilung von Frequenzbereichsressourcen zugeordnet ist.

10. UE nach Anspruch 1, wobei:
falls die Konfiguration ein SRS-Ressourcensatz für nCB ist, der eine SRS-Ressourcensatz bis zu 8 SRS-Ressourcen umfasst, und eine erste Hälfte der bis zu 8 SRS-Ressourcen dem ersten UL-TCI-Zustand zugeordnet ist, und eine zweite Hälfte der bis zu 8 SRS-Ressourcen dem zweiten UL-TCI-Zustand zugeordnet ist, dann:
ein 8-Bit-SRI-Feld, das in den DCI enthalten ist, bestimmt, dass die eingeplante PUSCH-Sendung eine Einzel-Panel-/ TRP-PUSCH-Sendung oder eine Multi-Panel-/ TRP-PUSCH-Sendung ist.

11. UE nach Anspruch 10, wobei:
falls die SRS-Ressourcen, die durch das 8-Bit-SRI-Feld angegeben werden, nur aus der ersten Hälfte oder der zweiten Hälfte stammen, die eingeplante PUSCH-Sendung eine Einzel-Panel-/ TRP-PUSCH-Sendung ist; und
falls die SRS-Ressourcen, die durch das 8-Bit-SRI-Feld angegeben werden, sowohl aus der ersten Hälfte als auch aus der zweiten Hälfte stammen, die eingeplante PUSCH-Sendung eine Multi-Panel-/ TRP-PUSCH-Sendung ist.

12. UE nach Anspruch 11, wobei:
falls die angegebenen SRS-Ressourcen nur aus der ersten Hälfte stammen, der erste UL-TCI-Zustand auf die eingeplante PUSCH-Sendung angewendet wird, und
falls die angegebenen SRS-Ressourcen nur aus der zweiten Hälfte stammen, der zweite UL-TCI-Zustand auf die eingeplante PUSCH-Sendung angewendet wird.

13. UE nach Anspruch 11, wobei:
falls ein Feld 'Antennenanschluss/-anschlüsse' der DCI einen oder mehrere DMRS-Anschlüsse in einer ersten CDM-Gruppe und einen oder mehrere DMRS-Anschlüsse in einer zweiten CDM-Gruppe angibt, und der höherschichtige Parameter nicht konfiguriert ist oder konfiguriert ist und auf 'fdmSchemeA' oder 'fdmSchemeB' eingestellt ist, dann der erste UL-TCI-Zustand auf eine oder mehrere PUSCH-Schichten der eingeplanten PUSCH-Sendung angewendet wird, die jeweils einem angegebenen DMRS-Anschluss in der ersten CDM-Gruppe zugeordnet sind, und der zweite UL-TCI-Zustand auf eine oder mehrere PUSCH-Schichten der eingeplanten PUSCH-Sendung angewendet wird, die jeweils einem angegebenen DMRS-Anschluss in der zweiten CDM-Gruppe zugeordnet sind,
falls der höherschichtige Parameter konfiguriert ist und auf sdmSchemeA' eingestellt ist, dann der erste UL-TCI-Zustand auf eine erste PUSCH-Sendegelegenheit angewendet wird, die den angegebenen SRS-Ressourcen aus der ersten Hälfte zugeordnet ist, und der zweite UL-TCI-Zustand auf eine zweite PUSCH-Sendegelegenheit angewendet wird, die den angegebenen SRS-Ressourcen aus der zweiten Hälfte zugeordnet ist,
falls das Feld 'Antennenanschluss/-anschlüsse' der DCI nur einen oder mehrere DMRS-Anschlüsse in der ersten CDM-Gruppe angibt, und der höherschichtige Parameter konfiguriert ist und auf 'fdmSchemeA' eingestellt ist, dann der erste UL-TCI-Zustand auf eine erste Zuteilung von Frequenzbereichsressourcen der eingeplanten PUSCH-Sendung angewendet wird, und der zweite UL-TCI-Zustand auf eine zweite Zuteilung von Frequenzbereichsressourcen angewendet wird, die sich nicht mit der ersten Zuteilung von Frequenzbereichsressourcen der eingeplanten PUSCH-Sendung überlappt, und
falls das Feld 'Antennenanschluss/-anschlüsse' der DCI nur einen oder mehrere DMRS-Anschlüsse in der ersten CDM-Gruppe angibt, der höherschichtige Parameter konfiguriert ist und auf 'fdmSchemeB' eingestellt ist, dann der erste UL-TCI-Zustand auf eine erste PUSCH-Sendegelegenheit der eingeplanten PUSCH-Sendung angewendet wird, die einer ersten Zuteilung von Frequenzbereichsressourcen zugeordnet ist, und der zweite UL-TCI-Zustand auf eine zweite PUSCH-Sendegelegenheit der eingeplanten PUSCH-Sendung angewendet wird, die einer zweiten Zuteilung von Frequenzbereichsressourcen zugeordnet ist, die sich nicht mit der ersten Zuteilung von Frequenzbereichsressourcen überlappt.

14. Verfahren, das von einem Endgerät, UE, ausgeführt wird, wobei das Verfahren umfasst:
Empfangen (302) eines höherschichtigen Parameters, der ein Schema eines Multi-Panel-/ Sende-Empfangs-Punkt-, TRP, gemeinsam genutzten physikalischen Uplink-Kanals, PUSCH, eine Konfiguration von zwei Sondierungsreferenzsignal-, SRS, Ressourcensätzen für eine Codebuch-, CB, oder Nicht-Codebuch-, nCB, basierte Uplink-Sendung in einem Bandbreitenteil, BWP, einer Zelle und Downlink-Steuerinformationen, DCI, die eine PUSCH-Sendung einplanen, angibt,
wobei die beiden SRS-Ressourcensätze einem ersten Zustand eines Uplink-, UL, Sendekonfigurationsindikators, TCI, und einem zweiten UL-TCI-Zustand zugeordnet sind; und
Bestimmen (304) der UL-TCI-Zustände, die auf die eingeplante PUSCH-Sendung angewendet werden, gemäß dem höherschichtigen Parameter und einem oder mehreren Feldern, die in den DCI enthalten sind, in Abhängigkeit von der Konfiguration der beiden SRS-Ressourcensätze für CB oder nCB, wobei, wenn ein Feldwert in den DCI '00' oder '01' ist, jeweils der erste oder der zweite TCI-Zustand auf die eingeplante PUSCH-Sendung angewendet wird.

15. Basisstation zur drahtlosen Kommunikation, wobei die Basisstation umfasst:
mindestens einen Speicher;
und mindestens einen Prozessor, der mit dem mindestens einen Speicher gekoppelt ist, und dazu konfiguriert ist, die Basisstation zu veranlassen zum:
Senden (402) eines Schemas eines Multi-Panel-/ Sende-Empfangs-Punkt-, TRP, gemeinsam genutzten physikalischen Uplink-Kanals, PUSCH, und einer Konfiguration von zwei Sondierungsreferenzsignal-, SRS, Ressourcensätzen für eine Codebuch-, CB, oder Nicht-Codebuch-, nCB, basierte Uplink-Sendung, wobei die beiden SRS-Ressourcensätze einem ersten Zustand eines Uplink-, UL, Sendungskonfigurationsindikators, TCI und einem zweiten UL-TCI-Zustand zugeordnet sind;
Bestimmen (404) der UL-TCI-Zustände, die auf eine PUSCH-Sendung angewendet werden, gemäß dem höherschichtigen Parameter, in Abhängigkeit von der Konfiguration; und
Senden (406) von Downlink-Steuerinformationen, DCI, welche die PUSCH-Sendung einplanen, wobei die DCI Felder enthalten, um die bestimmten UL-TCI-Zustände anzugeben, wobei, wenn ein Feldwert in den DCI '00' oder '01' ist, jeweils der erste oder der zweite TCI-Zustand auf eine eingeplante PUSCH-Sendung anzuwenden ist.

## Revendications

1. Equipement utilisateur, UE, pour communication sans fil, l'UE comprenant :
au moins une mémoire ; et
au moins un processeur couplé à ladite au moins une mémoire et configuré pour amener l'UE à
recevoir (302) un paramètre de couche supérieure qui indique un système de canal partagé physique de liaison montante, PUSCH, à panneaux/ points d'émission-réception, TRP, multiples, une configuration de deux ensembles de ressources de signal de référence de sondage, SRS, pour une émission de liaison montante à base de livre-code, CB, ou de non-livre-code, nCB, dans une partie de bande passante, BWP, d'une cellule et des informations de commande de liaison descendante, DCI, planifiant une émission PUSCH, dans lequel les deux ensembles de ressources SRS sont associés à un premier état d'indicateur de configuration d'émission, TCI, de liaison montante, et à un deuxième état de TCI UL ; et
déterminer (304) des états de TCI UL appliqués à l'émission PUSCH planifiée selon le paramètre de couche supérieure et un ou plusieurs champs contenus dans les DCI, en fonction de la configuration des deux ensembles de ressources SRS pour CB ou nCB, dans lequel, lorsqu'une valeur de champ dans les DCI est '00' ou '01', respectivement le premier ou le deuxième état de TCI est appliqué à l'émission PUSCH planifiée.

2. UE selon la revendication 1, dans lequel :
les deux ensembles de ressources SRS comprennent un premier ensemble de ressources SRS associé à un premier état de TCI UL et un deuxième ensemble de ressources SRS associé à un deuxième état de TCI UL, et :
un champ d'indicateur d'ensemble de ressources SRS, SRSI, contenu dans les DCI détermine que l'émission PUSCH planifiée est une émission PUSCH à panneau/ TRP unique ou une émission PUSCH à panneaux/ TRP multiples.

3. UE selon la revendication 2, dans lequel :
si une valeur de champ du champ SRSI est '00' ou '01', l'émission PUSCH planifiée est une émission PUSCH à panneau/ TRP unique ; et
si la valeur de champ du champ SRSI est '10' ou '11', l'émission PUSCH planifiée est une émission PUSCH à panneaux/ TRP multiples.

4. UE selon la revendication 3, dans lequel :
si la valeur de champ du champ SRSI est '00', le premier état de TCI UL est appliqué à l'émission PUSCH planifiée, et
si la valeur de champ du champ SRSI est '01', le deuxième état de TCI UL est appliqué à l'émission PUSCH planifiée.

5. UE selon la revendication 3, dans lequel :
si un champ 'port(s) d'antenne' des DCI indique un ou plusieurs ports de signal de référence de démodulation, DMRS, dans un premier groupe de multiplexage par division de code, CDM, et un ou plusieurs ports DMRS dans un deuxième groupe CDM, et le paramètre de couche supérieure n'est pas configuré ou est configuré et est réglé sur 'fdmSchemeA' ou 'fdmSchemeB', alors :
si la valeur de champ du champ SRSI est '10', le premier état de TCI UL est appliqué à une ou plusieurs couches PUSCH de l'émission PUSCH planifiée dont chacune est associée au port DMRS indiqué dans le premier groupe CDM, et le deuxième état de TCI UL est appliqué à une ou plusieurs couches PUSCH de l'émission PUSCH planifiée dont chacune est associée au port DMRS indiqué dans le deuxième groupe CDM, et
si la valeur de champ du champ SRSI est '11', le premier état de TCI UL est appliqué à une ou plusieurs couches PUSCH de l'émission PUSCH planifiée dont chacune est associée à un port DMRS indiqué dans le deuxième groupe CDM, et le deuxième état de TCI UL est appliqué à une ou plusieurs couches PUSCH de l'émission PUSCH planifiée dont chacune est associée au port DMRS indiqué dans le premier groupe CDM,
si le paramètre de couche supérieure est configuré et est réglé sur 'sdmSchemeA', alors : à la fois le premier état de TCI UL et le deuxième état de TCI UL sont appliqués à l'émission PUSCH planifiée,
si le champ 'port(s) d'antenne' des DCI n'indique qu'un ou plusieurs ports DMRS dans le premier groupe CDM, et le paramètre de couche supérieure est configuré et est réglé sur 'fdmSchemeA', alors :
si la valeur de champ du champ SRSI est '10', le premier état de TCI UL est appliqué à une première allocation de ressource du domaine fréquentiel de l'émission PUSCH planifiée, et le deuxième état de TCI UL est appliqué à une deuxième allocation de ressource du domaine fréquentiel qui ne se chevauche pas avec la première allocation de ressource du domaine fréquentiel de l'émission PUSCH planifiée, et
si la valeur de champ du champ SRSI est '11', le premier état de TCI UL est appliqué à la deuxième allocation de ressource du domaine fréquentiel de l'émission PUSCH planifiée, et le deuxième état de TCI UL est appliqué à la première allocation de ressource du domaine fréquentiel de l'émission PUSCH planifiée, et
si le champ 'port(s) d'antenne' des DCI n'indique qu'un ou plusieurs ports DMRS dans le premier groupe CDM, et le paramètre de couche supérieure est configuré et est réglé sur 'fdmSchemeB', alors :
si la valeur de champ du champ SRSI est '10', le premier état de TCI UL est appliqué à une première occasion d'émission PUSCH de l'émission PUSCH planifiée associée à une première allocation de ressource du domaine fréquentiel, et le deuxième état de TCI UL est appliqué à une deuxième occasion d'émission PUSCH de l'émission PUSCH planifiée associée à une deuxième allocation de ressource du domaine fréquentiel qui ne se chevauche pas avec la première allocation de ressource du domaine fréquentiel, et
si la valeur de champ du champ SRSI est '11', le premier état de TCI UL est appliqué à la deuxième occasion d'émission PUSCH de l'émission PUSCH planifiée associée à la deuxième allocation de ressource du domaine fréquentiel, et le deuxième état de TCI UL est appliqué à la première occasion d'émission PUSCH de l'émission PUSCH planifiée associée à la première allocation de ressource du domaine fréquentiel.

6. UE selon la revendication 1, dans lequel :
si la configuration est un ensemble de ressources SRS pour CB et ledit un ensemble de ressources SRS comprend une première ressource SRS associée au premier état de TCI UL et une deuxième ressource SRS associée au deuxième état de TCI UL ou comprend les deux premières ressources SRS associées au premier état de TCI UL et les deux dernières ressources SRS associées au deuxième état de TCI UL, alors
un champ de système PUSCH contenu dans les DCI détermine que l'émission PUSCH planifiée est une émission PUSCH à panneau/ TRP unique ou une émission PUSCH à panneaux/ TRP multiples.

7. UE selon la revendication 6, dans lequel :
si une valeur de champ du champ de système PUSCH est '0', l'émission PUSCH planifiée est une émission PUSCH à panneau/ TRP unique ; et
si la valeur de champ du champ de système PUSCH est '1', l'émission PUSCH planifiée est une émission PUSCH à panneaux/ TRP multiples.

8. UE selon la revendication 7, dans lequel :
si une valeur de champ d'un champ d'indicateur de ressource SR5 sur 1 bit, SRI, est '0', le premier état de TCI UL est appliqué à l'émission PUSCH planifiée, et
si la valeur de champ du champ SRI sur 1 bit est '1', le deuxième état de TCI UL est appliqué à l'émission PUSCH planifiée.

9. UE selon la revendication 7, dans lequel :
si un champ 'port(s) d'antenne' des DCI indique un ou plusieurs ports DMRS dans un premier groupe CDM et un ou plusieurs ports DMRS dans un deuxième groupe CDM, et le paramètre de couche supérieure n'est pas configuré ou est configuré et est réglé sur 'fdmSchemeA' ou 'fdmSchemeB', alors :
si la valeur de champ d'un champ SRI sur 1 bit est '0', le premier état de TCI UL est appliqué à une ou plusieurs couches PUSCH de l'émission PUSCH planifiée dont chacune est associée à un port DMRS indiqué dans le premier groupe CDM, et le deuxième état de TCI UL est appliqué à une ou plusieurs couches PUSCH de l'émission PUSCH planifiée dont chacune est associée à un port DMRS indiqué dans le deuxième groupe CDM, et
si la valeur de champ du champ SRI sur 1 bit est '1', le premier état de TCI UL est appliqué à une ou plusieurs couches PUSCH de l'émission PUSCH planifiée dont chacune est associée à un port DMRS indiqué dans le deuxième groupe CDM, et le deuxième état de TCI UL est appliqué à une ou plusieurs couches PUSCH de l'émission PUSCH planifiée dont chacune est associée à un port DMRS indiqué dans le premier groupe CDM,
si le paramètre de couche supérieure est configuré et est réglé sur 'sdmSchemeA', alors à la fois le premier état de TCI UL et le deuxième état de TCI UL sont appliqués à l'émission PUSCH planifiée,
si le champ 'port(s) d'antenne' des DCI n'indique qu'un ou plusieurs ports DMRS dans le premier groupe CDM, et le paramètre de couche supérieure est configuré et est réglé sur 'fdmSchemeA', alors :
si la valeur de champ du champ SRI sur 1 bit est '0', le premier état de TCI UL est appliqué à une première allocation de ressource du domaine fréquentiel de l'émission PUSCH planifiée, et le deuxième état de TCI UL est appliqué à une deuxième allocation de ressource du domaine fréquentiel qui ne se chevauche pas avec la première allocation de ressource du domaine fréquentiel de l'émission PUSCH planifiée, et
si la valeur de champ du champ SRI sur 1 bit est '1', le premier état de TCI UL est appliqué à la deuxième allocation de ressource du domaine fréquentiel de l'émission PUSCH planifiée, et le deuxième état de TCI UL est appliqué à la première allocation de ressource du domaine fréquentiel de l'émission PUSCH planifiée, et
si le champ 'port(s) d'antenne' des DCI n'indique que des ports DMRS dans le premier groupe CDM, et le paramètre de couche supérieure est configuré et est réglé sur 'fdmSchemeB', alors :
si la valeur de champ du champ SRI sur 1 bit est '0', le premier état de TCI UL est appliqué à une première occasion d'émission PUSCH de l'émission PUSCH planifiée associée à une première allocation de ressource du domaine fréquentiel, et le deuxième état de TCI UL est appliqué à une deuxième occasion d'émission PUSCH de l'émission PUSCH planifiée associée à une deuxième allocation de ressource du domaine fréquentiel qui ne se chevauche pas avec la première allocation de ressource du domaine fréquentiel, et
si la valeur de champ du champ SRI sur 1 bit est '1', le premier état de TCI UL est appliqué à la deuxième occasion d'émission PUSCH de l'émission PUSCH planifiée associée à la deuxième allocation de ressource du domaine fréquentiel, et le deuxième état de TCI UL est appliqué à la première occasion d'émission PUSCH de l'émission PUSCH planifiée associée à la première allocation de ressource du domaine fréquentiel.

10. UE selon la revendication 1, dans lequel :
si la configuration est un ensemble de ressources SRS pour nCB, ledit un ensemble de ressources SRS comprend jusqu'à 8 ressources SRS, et une première moitié des jusqu'à 8 ressources SRS est associée au premier état de TCI UL et une deuxième moitié des jusqu'à 8 ressources SRS est associée au deuxième état de TCI UL, alors :
un champ SRI sur 8 bits contenu dans les DCI détermine que l'émission PUSCH planifiée est une émission PUSCH à panneau/ TRP unique ou une émission PUSCH à panneaux/ TRP multiples.

11. UE selon la revendication 10, dans lequel :
si les ressources SRS indiquées par le champ SRI sur 8 bits ne proviennent que de la première moitié ou de la deuxième moitié, l'émission PUSCH planifiée est une émission PUSCH à panneau/ TRP unique ; et
si les ressources SRS indiquées par le champ SRI sur 8 bits proviennent à la fois de la première moitié et de la deuxième moitié, l'émission PUSCH planifiée est une émission PUSCH à panneaux/ TRP multiples.

12. UE selon la revendication 11, dans lequel :
si les ressources SRS indiquées ne proviennent que de la première moitié, le premier état de TCI UL est appliqué à l'émission PUSCH planifiée, et
si les ressources SRS indiquées ne proviennent que de la deuxième moitié, le deuxième état de TCI UL est appliqué à l'émission PUSCH planifiée.

13. UE selon la revendication 11, dans lequel :
si un champ 'port(s) d'antenne' des DCI indique un ou plusieurs ports DMRS dans un premier groupe CDM et un ou plusieurs ports DMRS dans un deuxième groupe CDM, et le paramètre de couche supérieure n'est pas configuré ou est configuré et est réglé sur 'fdmSchemeA' ou 'fdmSchemeB', alors le premier état de TCI UL est appliqué à une ou plusieurs couches PUSCH de l'émission PUSCH planifiée dont chacune est associée à un port DMRS indiqué dans le premier groupe CDM, et le deuxième état de TCI UL est appliqué à une ou plusieurs couches PUSCH de l'émission PUSCH planifiée dont chacune est associée à un port DMRS indiqué dans le deuxième groupe CDM,
si le paramètre de couche supérieure est configuré et est réglé sur sdmSchemeA', alors le premier état de TCI UL est appliqué à une première occasion d'émission PUSCH associée aux ressources SRS indiquées provenant de la première moitié, et le deuxième état de TCI UL est appliqué à une deuxième occasion d'émission PUSCH associée aux ressources SRS indiquées provenant de la deuxième moitié,
si le champ 'port(s) d'antenne' des DCI n'indique qu'un ou plusieurs ports DMRS dans le premier groupe CDM, et le paramètre de couche supérieure est configuré et est réglé sur 'fdmSchemeA', alors le premier état de TCI UL est appliqué à une première allocation de ressource du domaine fréquentiel de l'émission PUSCH planifiée, et le deuxième état de TCI UL est appliqué à une deuxième allocation de ressource du domaine fréquentiel qui ne se chevauche pas avec la première allocation de ressource du domaine fréquentiel de l'émission PUSCH planifiée, et
si le champ 'port(s) d'antenne' des DCI n'indique qu'un ou plusieurs ports DMRS dans le premier groupe CDM, le paramètre de couche supérieure est configuré et est réglé sur 'fdmSchemeB', alors le premier état de TCI UL est appliqué à une première occasion d'émission PUSCH de l'émission PUSCH planifiée associée à une allocation de ressource du domaine fréquentiel, et le deuxième état de TCI UL est appliqué à une deuxième occasion d'émission PUSCH de l'émission PUSCH planifiée associée à une deuxième allocation de ressource du domaine fréquentiel qui ne se chevauche pas avec la première allocation de ressource du domaine fréquentiel.

14. Procédé effectué par un équipement utilisateur, UE, le procédé comprenant les étapes consistant à :
recevoir (302) un paramètre de couche supérieure qui indique un système de canal partagé physique de liaison montante, PUSCH, à panneaux/ points d'émission-réception, TRP, multiples, une configuration de deux ensembles de ressources de signal de référence de sondage, SRS, pour une émission de liaison montante à base de livre-code, CB, ou de non-livre-code, nCB, dans une partie de bande passante, BWP, d'une cellule et des informations de commande de liaison descendante, DCI, planifiant une émission PUSCH, dans lequel les deux ensembles de ressources SRS sont associés à un premier état d'indicateur de configuration d'émission, TCI et à un deuxième état de TCI d'un deuxième UL ; et
déterminer (304) des états de TCI UL appliqués à l'émission PUSCH planifiée selon le paramètre de couche supérieure et un ou plusieurs champs contenus dans les DCI, en fonction de la configuration des deux ensembles de ressources SRS pour CB ou nCB, dans lequel, lorsqu'une valeur de champ dans les DCI est '00' ou '01', respectivement le premier ou le deuxième état de TCI est appliqué à l'émission PUSCH planifiée.

15. Station de base pour communication sans fil, la station de base comprenant :
au moins une mémoire ;
et au moins un processeur couplé à ladite au moins une mémoire et configuré amener la station de base à :
émettre (402) un système de canal partagé physique de liaison montante, PUSCH, à panneaux/ points d'émission-réception, TRP, multiples, et une configuration de deux ensembles de ressources de signal de référence de sondage, SRS, pour une émission de liaison montante à base de livre-code, CB, ou de non-livre-code, nCB, dans lequel les deux ensembles de ressources SRS sont associés à un premier état d'indicateur de configuration d'émission, TCI, de liaison montante, UL, et à un deuxième état de TCI UL ;
déterminer (404) des états de TCI UL appliqués à une émission PUSCH selon le paramètre de couche supérieure, en fonction de la configuration ; et
émettre (406) une information de commande de liaison descendante, DCI, planifiant l'émission PUSCH, dans lequel les DCI contiennent des champs pour indiquer les états de TCI UL déterminés, dans lequel, lorsqu'une valeur de champ dans les DCI est '00' ou '01', respectivement le premier ou le deuxième état de TCI est à appliquer à une émission PUSCH planifiée.
